(19) Europäisches Patentamt
European Patent Office
Office européen des brevets

(11) **EP 2 684 852 B1**

(12) **EUROPÄISCHE PATENTSCHRIFT**

(45) Veröffentlichungstag und Bekanntmachung des Hinweises auf die Patenterteilung:
**17.10.2018 Patentblatt 2018/42**

(51) Int Cl.:
**C04B 11/028** (2006.01)

(21) Anmeldenummer: **13176141.3**

(22) Anmeldetag: **11.07.2013**

(54) **Verfahren zur Herstellung von Calciumsulfat-beta-Halbhydrat**

Method for manufacturing of calcium sulfate beta hemihydrate

Procédé destiné à la fabrication de sulfate de calcium hémihydrate bêta

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.07.2012 EP 12176141**

(43) Veröffentlichungstag der Anmeldung:
**15.01.2014 Patentblatt 2014/03**

(73) Patentinhaber: **Knauf Gips KG**
**97346 Iphofen (DE)**

(72) Erfinder:
• **Voigt, Wolfgang**
**91593 Burgbernheim (DE)**
• **Kleemann, Anja**
**74589 Satteldorf (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
DE-C- 937 276    FR-A- 1 170 882
GB-A- 1 262 083    JP-A- 58 115 048

• wikipedia: "Schnellkochtopf", , 14 January 2012 (2012-01-14), Retrieved from the Internet: URL:https://de.wikipedia.org/wiki/Schnellkochtopf [retrieved on 2016-10-11]

EP 2 684 852 B1

**Beschreibung**

Die vorliegende Erfindung betrifft ein Verfahren zur Herstellung von gebranntem Gips.

Gips ist ein beliebter Baustoff mit zahlreichen Anwendungen. Hierzu wird dem Gips durch "Brennen" ein Teil des Wassers entzogen, so dass Calciumsulfat-Halbhydrat entsteht. Bei Zusatz von Wasser bindet der Gips in kurzer Zeit ab und bildet dabei stabile Strukturen ab, die beispielsweise für Gipsplatten, Putze, etc. verwendet werden.

Halbhydrat kommt in zwei Modifikationen vor, $\alpha$- und $\beta$-Halbhydrat. $\alpha$-Halbhydrat wird in geschlossenen Gefäßen (Autoklaven) bei hohen Drücken erzeugt. Der daraus erhältliche Gips ist hart und benötigt weniger Wasser, aber längere Zeit zum Abbinden.

$\beta$-Halbhydrat wird in offenen Gefäßen unter Normaldruck gebrannt. Das Abbinden durch die Zugabe von mehr Wasser als beim $\alpha$-Halbhydrat, die erhaltenen Gipse sind aber weicher.

Calciumsulfat-Halbhydrat ist der Hauptbestandteil von Stuckgips. Bei Stuckgips können teilweise andere Phasen des gebrannten Gipses wie Anhydrit enthalten sein.

Verfahren zum Brennen von Gips sind schon seit dem Mittelalter bekannt. Weiterhin ist bekannt, dass Stuckgipse aus Kochern ein stabileres Korn, das heißt einen, gegenüber anderen Methoden zur Herstellung von Stuckgips, wie etwa Drehrohröfen, geringeren Kornzerfall im Wasser aufweisen.

DE 693 05 993 T2 betrifft ein Verfahren zur Herstellung von gebranntem Gips, bei dem das Brennen des Gipses unter Druck mit überhitztem Dampf in einem sich drehenden, horizontalen, zylindrischen Ofen erfolgt. Dieser drehende, horizontale Ofen ist mit Mitteln zur Einstellung und zur Kontrolle der Temperatur und des Druckes versehen.

GB 1262083 A betrifft ein Verfahren zur Verstellung von $\alpha$-Halbhydrat umfassend das Mischen eines Kristallhabitusmodifikators mit pulverförmigem Gips und Agglomeration der Mischung zu beispielsweise Briketts vor dem Autoklavieren.

Ein drehender, horizontaler, zylindrischer Ofen ist mit einem erheblichen apparativen Aufwand verbunden. Darüber hinaus zeigt sich, dass durch Steuerung von Temperatur und Dampfdruck nicht immer Gipse mit den gewünschten Eigenschaften erzeugt werden können. Es besteht daher weiterhin Bedarf nach verbesserten Verfahren und verbesserten Vorrichtungen zum Brennen von Gips.

Aufgabe der vorliegenden Erfindung ist es, ein solches Verfahren und eine solche Vorrichtung bereitzustellen.

Gelöst wird die Aufgabe durch ein Verfahren zum Brennen von Gips, wobei das Brennen in einem feststehenden Gipskocher durchgeführt wird.

Überraschenderweise können mit dem erfindungsgemäßen Verfahren Calciumsulfat-$\beta$-Halbhydrate erhalten werden, die gegenüber dem normalen Kocherprozess einen deutlich niedrigeren Wasser-Gipswert aufweisen.

Gegenstand der vorliegenden Erfindung ist daher ein Verfahren zur Herstellung von Calciumsulfat-$\beta$-Halbhydrat umfassend die Schritte:

- Einbringen von definierten Mengen von Gips und gegebenenfalls Wasser in einen feststehenden, druckfesten Gipskocher, um eine Materialsäule aus fluidisiertem Gips zu bilden
- Energiezufuhr, bis die Gipstemperatur mehr als 110°C beträgt und eine anschließende Umwandlung von Gips in Calciumsulfat-$\beta$-Halbhydrat erfolgt ist
- Trocknen des Calciumsulfat-$\beta$-Halbhydrats,

wobei während der Umwandlung ein maximaler Überdruck im Bereich von 100 bis 5000 hPa eingehalten wird.

Erfindungsgemäß wird also Gips (Calciumsulfat-Dihydrat) in einen feststehenden, d.h. nicht drehenden, druckfesten Gipskocher eingebracht. Dabei erfolgt das Einbringen bevorzugt in einen senkrecht aufgebauten bzw. vertikalen Gipskocher, bei dem der Aufnahmebehälter eine größere Ausdehnung in vertikaler als in horizontaler Ausrichtung aufweist, um die Bildung einer Materialsäule und eines Widerstandes zu dem aufströmenden Wasserdampf zu bewirken. Bevorzugt hat die Aufnahmevorrichtung des Gipskochers eine im Wesentlichen rotationssymetrische Anordnung um eine vertikale Achse.

Im Gegensatz hierzu wird im Stand der Technik dies nicht erreicht. Dies hat seine Ursache in der apparatebedingten Umwälzung des Gipses, hierbei kann sich kein statischer Druck durch eine Materialsäule aufbauen. Weiterhin kommt es durch den fehlenden Widerstand der Materialsäule zu einem schnellen Abtransport des Wasserdampfes von den Gipskörnern.

Nach dem Einbringen erfolgt eine Erhitzung des eingebrachten Gipses auf Temperaturen von mehr als 110°C. Es hat sich dabei als vorteilhaft erwiesen, wenn die Temperaturzufuhr nicht zu schnell erfolgt, so dass das eingebrachte Material schonend erhitzt wird. Gleichzeitig verhindert der Widerstand der Materialsäule im Kocher, dass Gipskorn und der entstehende Wasserdampf schnell voneinander separiert werden. Dementsprechend sind rotierende, horizontale Calciniervorrichtung kontraproduktiv. Der entweichende Wasserdampf muss anschließend gegen den Widerstand dieser Materialsäule aus fluidisiertem Gips nach oben wandern. Dieser Effekt ist bei einem Drehrohrsystem nicht gegeben. Bei einem rotierenden Aggregat wird der Gips durch die Rotation des Ofens permanent umgewälzt, so dass der Wasserdampf zügig vom Gipskern abgetrennt wird. Erfindungsgemäß erfolgt eine Ausnutzung des statischen Druckes der Materialsäule im Kocher nur mit geringem Wasserdampfdruck.

Während der Erwärmung steigt der Druck in dem Gefäß. Erfindungsgemäß wird dieser Druck eng begrenzt, d.h. es wird je nach Verfahrensführung ein maximaler Überdruck gewählt. Wenn dieser überschritten wird, wird der entsprechende Überdruck durch eine Druckentlastungsvorrichtung abgelassen.

Typischerweise liegt der Überdruck nur im Bereich von 0,1 bis 5 bar. Werte von 0,1 bis 2,5 bar oder 0,2 bis 1 bar haben sich als besonders gut geeignet erwiesen. Im Vergleich zur Herstellung von α-Halbhydrat sind die Drücke wesentlich geringer.

Der entstehende Überdruck besteht damit aus dem statischen Druck der Materialsäule sowie durch die Verdampfung von anhaftendem Wasser, aber insbesondere durch die Freisetzung von Kristallwasser aus dem Calciumsulfat-Dihydrat. Nachdem die Umwandlung in Calciumsulfat-Halbhydrat erfolgt ist, erfolgt ein schnelles Ablassen des Überdrucks. Bei einer kontinuierlichen Betriebsweise wird umgewandeltes Calciumsulfat-Dihydrat dem Verfahren über ein Schleusensystem entzogen und dabei auf Normaldruck gebracht. Bei einer diskontinuierlichen Betriebsweise wird in einfachster Weise eine größere Öffnung zum Ablassen des Überdrucks geöffnet, beispielsweise durch eine große Filteröffnung. Es hat sich gezeigt, dass, wenn das Ablassen des Dampfes zu langsam erfolgt, das Calciumsulfat-β-Halbhydrat rehydratisieren kann.

Anschließend erfolgt ein Trocknen des Calciumsulfat-β-Halbhydrats. Dies kann zum einen direkt im nun geöffneten Gipskocher erfolgen, es kann aber auch in einem nachgeschalteten Aggregat erfolgen. Insbesondere, wenn das Verfahren kontinuierlich betrieben werden soll, ist das Trocknen in einem nachgeschalteten Aggregat notwendig. Bevorzugt folgt vor dem Trocknen ein Ablassen des Überdrucks, um ein Trocknen in einer entspannten Atmosphäre durchzuführen.

In einer bevorzugten Ausführungsform wird der eingebrachte Gips während des Verfahrens gerührt.

Es zeigt sich, dass durch das erfindungsgemäße Verfahren die Umwandlung des Gipses in kürzerer Zeit erfolgt. Typischerweise genügt es, das Verfahren für eine Zeit von etwa 90 bis 120 min durchzuführen. Dies hängt natürlich, von der Aufheizgeschwindigkeit, den Dimensionen, etc. ab. Es zeigt sich aber, dass die Umwandlungszeit umso kürzer wird, je weiter der Druck erhöht wird.

Die Umwandlung lässt sich durch den Temperaturverlauf im Gipskocher in einfacher Weise verfolgen. In einer ersten Phase steigt die Temperatur im Kocher relativ schnell an, bis eine Temperatur etwas über 110°C erreicht wird. Je nach apparativer Ausgestaltung beträgt diese Zeit etwa 20 bis 40 min.

Anschließend durchläuft trotz weiterem Energieeintrag der Temperaturverlauf ein Plateau, der bedingt ist durch die Energie, die zur Freisetzung eines Teiles des Kristallwassers benötigt wird. Die Umwandlung ist abgeschlossen, wenn die Temperatur im Kocher wieder schneller steigt. Während des Plateaus bleibt die Temperatur etwa im Bereich von 110 bis 130°C und steigt dann auf höhere Temperaturen an.

Wichtig ist, dass während des Verfahrens der Druck geregelt wird, d.h. zu hohe Drücke durch eine Druckentlastungsvorrichtung, beispielsweise ein einfaches Ventil, abgelassen werden.

Während natürlich zur Durchführung des Verfahrens der Gipskocher druckfest sein muss und alle Zuleitungen druckdichtgeschlossen sein müssen, ist ein Betrieb bei Drucken von nicht mehr als 5 bar oder insbesondere Drucke von nicht mehr als 1 bar noch mit relativ geringem apparativen Aufwand verbunden.

Gegenstand der Erfindung ist auch das durch das erfindungsgemäße Verfahren erhältliche Calciumsulfat-β-Halbhydrat. Soweit in dieser Anmeldung auf Calciumsulfat-β-Halbhydrat Bezug genommen wird, umfasst dies auch Mischphasen mit geringen Teilen Anhydrit und Alphagips, die als Stuckgips bezeichnet werden.

Während üblicherweise in einem offenen Prozess hergestelltes α-Halbhydrat Wasser-Gipswerte im Bereich von 0,6 aufweisen, erreichen die erfindungsgemäß hergestellten Calciumsulfat-β-Halbhydrate Wasser-Gipswerte im Bereich von etwa 0,35 bis 0,55. Der Wasser-Gipswert (W) ergibt sich nach der Formel

$$W = 100/E$$

E ist die Menge an Gips in g, die beim Einstreuen in 100 ml Wasser durchfeuchtet wird und wird gemäß EN13279/1 erhalten. Die Einstreumengen liegen damit im Bereich von etwa 180 bis 285.

Gegenstand der Erfindung ist weiterhin ein Gipskocher zur Herstellung von Calciumsulfat-β-Halbhydrat, insbesondere zur Durchführung des erfindungsgemäßen Verfahrens mit einem druckfesten Aufnahmebehälter, einer druckdichtverschließbaren Einfüllöffnung zum Einfüllen von Gips und gegebenenfalls Wasser und einer druckdichtverschließbaren Entnahmeöffnung zur Entnahme des hergestellten Calciumsulfat-β-Halbhydrats, wobei der Aufnahmebehälter zusätzlich eine Ablassöffnung und eine Sicherheitsvorrichtung zum Ablassen von Überdruck aufweist, wobei eine Dampf-Ablassöffnung vorhanden ist, die gegebenenfalls mit einem Filterelement, insbesondere zum Ausfiltern von Calciumsulfat-β-Halbhydrat verbunden ist und wobei der Gipskocher so eingerichtet ist, dass sich bei der Durchführung des Verfahrens eine Materialsäule aus fluidisiertem Gips bildet.

Die Einfüll- und Entnahmeöffnungen können beispielsweise als dichte Schleuse ausgebildet sein, es kann aber alternativ auch Sperrdruckluft verwendet werden, um eine Abdichtung zu erreichen.

Auf der einen Seite umfasst die Vorrichtung auch eine Sicherheitsvorrichtung zur Steuerung des Überdrucks. Dies kann in einfacher Ausführung ein Ventil sein, das auf einen Überdruck eingestellt wird. Es kann aber alternativ auch der Druck in der Vorrichtung überwacht werden und beim Überschreiten festgelegter Werte manuell eine kurzzeitige Öffnung der Sicherheitsvorrichtung erfolgen.

Zusätzlich ist eine größere Ablassöffnung vorgesehen, die ein schnelles Ablassen des Wasserdampfes (Brüden) und damit eine sofortige Trocknung des Gipses am Ende des Prozesses zulässt. Für diese größere Ablassöffnung haben sich insbesondere Filterelemente bewährt, die ein Austritt des Calciumsulfat-Halbhydrats bei der Öffnung verhindern. Diese sind allerdings als Sicherheitsvorrichtung weniger geeignet, da Filter, wenn sie über einen längeren Zeitraum betrieben werden, durch Absetzen von Calciumsulfat und Wasser verstopfen.

Wie oben dargelegt, kann der Aufnahmebehälter zusätzlich eine Rührvorrichtung aufweisen. Für solche Rührvorrichtungen wie beispielsweise eine Rührwelle, reicht zur Abdichtung beispielsweise eine Gleitringdichtung.

Durch geeignete Mittel wird der Aufnahmebehälter erwärmt bzw. durch Isolationsmaßnahmen die Wärme gehalten. Dies kann beispielsweise ein Gasbrenner, eine elektrische Heizung oder Ähnliches sein.

In einigen Ausführungsformen ist bevorzugt, dass die Rohrleitungen und Filter an der Vorrichtung beheizbar sind. Die Verwendung beheizter und ggf. isolierter Filter und Rohrleitung verhindert die Kondensatbildung, die zu einer Rehydratisierung des Produktes führen können.

In manchen Ausführungsformen kann es vorteilhaft sein, dass eine Füll- und Entnahmeöffnung als gemeinsame Öffnung ausgebildet sind.

Die Erfindung wird durch die nachfolgenden Beispiele näher erläutert.

### Beispiel 1

Gips wurde in die erfindungsgemäße Vorrichtung eingebracht und dem erfindungsgemäßen Verfahren unterzogen.

Dabei wurden verschiedene maximale Überdrucke eingestellt.

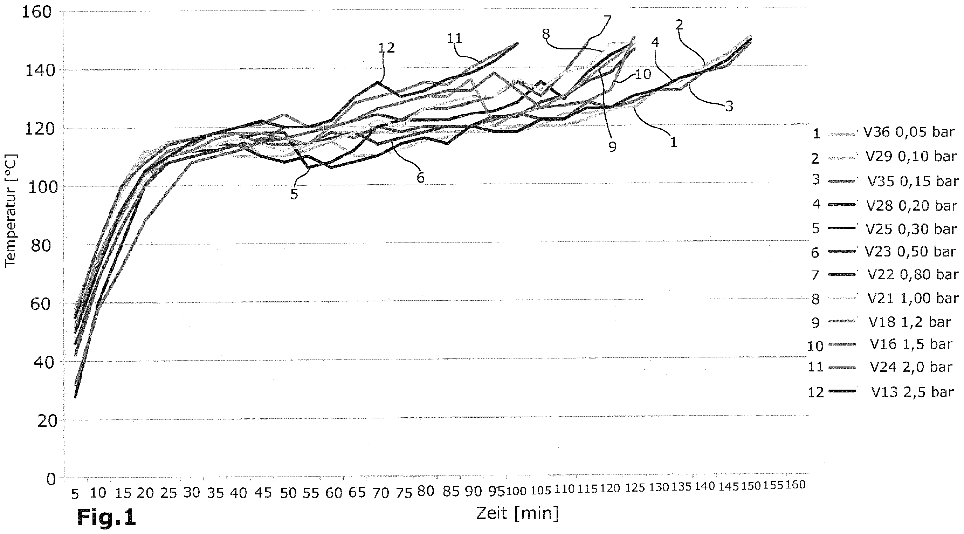

Figur 1 zeigt die Temperaturverläufe während des Verfahrens bei unterschiedlichen Drücken. Dabei stellt der Betrieb bei einem Überdruck von 0 bar ein Vergleichsbeispiel dar.

Die nachfolgende Tabelle 1 zeigt, bei welcher Zeit bei den erfindungsgemäßen Verläufen die Umwandlung abgeschlossen war, so dass das Verfahren beendet werden konnte.

| Maximaler Druck [bar] | Ende (130°C) [min] |
|---|---|
| 0 | 120 |
| 0,1 | 120 |
| 0,2 | 110 |
| 0,5 | 105 |

(fortgesetzt)

| Maximaler Druck [bar] | Ende (130°C) [min] |
|---|---|
| 1,2 | 100 |
| 2 | 90 |
| 2,5 | 90 |

Es zeigt sich, dass durch eine Erhöhung des Druckes die Zeit von 120 min auf 90 min verkürzt werden kann. Dies ist natürlich abhängig von der Dimension und dem Energieeintrag in den Kocher. In jedem Fall führt aber eine Verkürzung der Kochzeit zum einem zu einer Durchsatzsteigerung, weil in kürzerer Zeit mehr Gips umgewandelt werden kann. Da die Anlagen Wärmeverluste aufweisen, führt dies auch zu Energieeinsparungen.

Überraschend ist aber insbesondere, dass die erhaltenen Materialien geringere Wasser-Gipswerte (WGW) aufweisen, siehe Tabelle 2.

| Maximaler Druck [bar] | WGW |
|---|---|
| 0 | 0,61 |
| 0,1 | 0,53 |
| 0,2 | 0,49 |
| 0,5 | 0,49 |
| 1,2 | 0,45 |
| 2 | 0,44 |
| 2,5 | 0,42 |

Ein Calciumsulfat-Halbhydrat, das einen geringeren Wasser-Gipswert hat, benötigt bei der Verarbeitung weniger Wasser. Dies führt dazu, dass die Produkte nach dem Abbinden entweder schneller trocknen oder bei der Herstellung von Gipsplatten Zeit- und Energieaufwand für das Trocknen deutlich verringert werden könnten.

**Patentansprüche**

1. Verfahren zur Herstellung von Calciumsulfat-β-Halbhydrat umfassend die Schritte:

- Einbringen von definierten Mengen von Gips und gegebenenfalls Wasser in einen feststehenden, druckfesten Gipskocher, um eine Materialsäule aus fluidisiertem Gips zu bilden
- Energiezufuhr, bis die Gipstemperatur mehr als 110°C beträgt und eine anschließende Umwandlung von Gips in Calciumsulfat-β-Halbhydrat erfolgt ist
- Trocknen des Calciumsulfat-β-Halbhydrats,

wobei während der Umwandlung ein maximaler Überdruck im Bereich von 100 bis 5000 hPa eingehalten wird.

2. Verfahren nach Anspruch 1, wobei das Trocknen im Kocher erfolgt oder in einem nachgeschaltetem Aggregat.

3. Verfahren nach Anspruch 2, wobei der Gips gerührt wird.

4. Verfahren nach einem der Ansprüche 2 oder 3, wobei der Dampfdruck zusammen mit dem durch den Widerstand der Materialsäule erzeugten Druck wirkt, bevorzugt um durch den Widerstand der Materialsäule den Abtransport des entstehenden Wasserdampfes verlangsamen zu können.

5. Verfahren nach einem der Ansprüche 1 bis 4, **dadurch gekennzeichnet, dass** die Behandlung für eine Zeit von 90 bis 120 min erfolgt.

6. Verfahren nach einem der Ansprüche 1 bis 5, **dadurch gekennzeichnet, dass** die Energiezufuhr erfolgt, bis die Temperatur im Bereich von 130 bis 160°C liegt.

7. Verfahren nach einem der Ansprüche 1 bis 6, **dadurch gekennzeichnet, dass** der maximale Überdruck im Bereich von 200 bis 2500 hPa liegt.

8. Calciumsulfat-β-Halbhydrat erhältlich nach einem der Ansprüche 1 bis 7.

9. Calciumsulfat-β-Halbhydrat nach Anspruch 8, **dadurch gekennzeichnet, dass** der Wasser-Gips-Wert zwischen 0,35 und 0,55 liegt.

10. Gipskocher zur Herstellung von Calciumsulfat-β-Halbhydrat zur Durchführung des Verfahrens nach einem der Ansprüche 1 bis 9, mit
einem druckfesten Aufnahmebehälter, mit einer druckdichtverschließbaren Einfüllöffnung zum Einfüllen von Gips und gegebenenfalls Wasser und einer druckdichtverschließbaren Entnahmeöffnung zur Entnahme des hergestellten Calciumsulfat-β-Halbhydrats,
wobei der Aufnahmebehälter zusätzlich eine Sicherheitsvorrichtung zum Ablassen von Überdruck aufweist und
wobei eine Dampf-Ablassöffnung vorhanden ist, die gegebenenfalls mit einem Filterelement, insbesondere zum Ausfiltern von Calciumsulfat-β-Halbhydrat verbunden ist und
wobei der Gipskocher so eingerichtet ist, dass sich bei der Durchführung des Verfahrens eine Materialsäule aus fluidisiertem Gips bildet.

11. Vorrichtung nach Anspruch 10, **dadurch gekennzeichnet, dass** der Aufnahmebehälter mit Dichtsystemen wie einer Gleitringdichtung am Rührerwerk und/oder Dichtsystemen an Zu- und Abführvorrichtungen von Material und Brüden wie speziell abge-dichteten Schleusen gegen Dampfaustritt ausgerüs-tet ist.

12. Vorrichtung nach Anspruch 10 oder 11, **gekennzeichnet durch** eine den Aufnahmebehälter erwärmende Heizeinrichtung zum Erwärmen des im Aufnahmebehälter angeordnetem Gips und Wassers auf mehr als 100°C.

13. Vorrichtung nach Anspruch 11 oder 12, **gekennzeichnet durch** den Einsatz beheizter und / oder isolierter Rohrleitung und Filter.

14. Vorrichtung nach einem der Ansprüche 10 bis 13, **dadurch gekennzeichnet, dass** die Einfüllöffnung und die Entnahmeöffnung als gemeinsame Öffnung ausgebildet sind.

**Claims**

1. A process for producing calcium sulfate β-hemihydrate, comprising the steps of:

   - placing defined quantities of gypsum and optionally water into a stationary pressure-resistant gypsum kettle to form a material column of fluidized gypsum;
   - supplying energy until the gypsum temperature is higher than 110 °C and a subsequent conversion of gypsum to calcium sulfate β-hemihydrate has been effected;
   - drying said calcium sulfate β-hemihydrate;

   wherein a maximum overpressure within a range of from 100 to 5000 hPa is maintained during the conversion.

2. The process according to claim 1, wherein said drying is performed in the kettle or in a downstream aggregate.

3. The process according to claim 2, wherein the gypsum is stirred.

4. The process according to either of claims 2 or 3, wherein the vapor pressure acts together with the pressure generated by the resistance of the material column, preferably to be able to slow down the removal of the produced water vapor by the resistance of the material column.

5. The process according to any of claims 1 to 4, **char-**

**acterized in that** the treatment is effected for a period of from 90 to 120 min.

6. The process according to any of claims 1 to 5, **characterized in that** the energy supply is effected until the temperature is within a range of from 130 to 160 °C.

7. The process according to any of claims 1 to 6, **characterized in that** the maximum overpressure is within a range of from 200 to 2500 hPa.

8. Calcium sulfate β-hemihydrate obtainable according to any of claims 1 to 7.

9. The calcium sulfate β-hemihydrate according to claim 8, **characterized in that** the water-to-gypsum ratio is from 0.35 to 0.55.

10. A gypsum kettle for producing calcium sulfate β-hemihydrate for performing the process according to any of claims 1 to 9, comprising
a pressure-resistant receptacle with a pressure-tightly closable filling opening for filling in gypsum and optionally water, and a pressure-tightly closable recovery opening for recovering the calcium sulfate β-hemihydrate produced;
wherein said receptacle additionally has a safety device for releasing overpressure; and
wherein a steam discharge opening is present, which is optionally connected with a filter element, especially for filtering out calcium sulfate β-hemihydrate; and
wherein said gypsum kettle is designed in such a way that a material column of fluidized gypsum is formed when the process is performed.

11. The device according to claim 10, **characterized in that** the receptacle is equipped with sealing systems, such as a mechanical seal, at the agitator and/or sealing systems on feeding and withdrawing devices for materials and vapors, such as specifically sealed locks against the escape of steam.

12. The device according to claim 10 or 11, **characterized by** a heating means heating said receptacle for heating the gypsum and water provided in the receptacle to more than 100 °C.

13. The device according to claim 11 or 12, **characterized by** the use of a heated and/or insulated pipeline and filter.

14. The device according to any of claims 10 to 13, **characterized in that** said filling opening and recovery opening are designed as one common opening.

**Revendications**

1. Procédé de production d'hémihydrate de sulfate de calcium du type bêta, comprenant les étapes suivantes :

   - mise en place de quantités définies de gypse et éventuellement d'eau dans un cuiseur de gypse fixe résistant à la pression pour former une colonne de matériau à partir de gypse fluidisé,
   - alimentation d'énergie jusqu'à ce que la température du gypse dépasse 110 °C et jusqu'à la survenue d'une transformation consécutive du gypse en hémihydrate de sulfate de calcium du type bêta,
   - séchage de l'hémihydrate de sulfate de calcium du type bêta,

   dans lequel une surpression maximale dans la plage de 100 à 5000 hPa étant maintenue pendant la transformation.

2. Procédé selon la revendication 1, dans lequel le séchage s'effectue dans le cuiseur ou dans une unité montée en aval.

3. Procédé selon la revendication 2, dans lequel le gypse est agité.

4. Procédé selon l'une des revendications 2 ou 3, dans lequel la pression de vapeur agit conjointement avec la pression produite par la résistance de la colonne de matériau, de préférence pour pouvoir ralentir par la résistance de la colonne de matériau l'évacuation de la vapeur d'eau créée.

5. Procédé selon l'une des revendications 1 à 4, **caractérisé en ce que** le traitement est effectué pendant une durée de 90 à 120 min.

6. Procédé selon l'une des revendications 1 à 5, **caractérisé en ce que** l'alimentation en énergie s'effectue jusqu'à ce que la température se situe dans la plage de 130 à 160°C.

7. Procédé selon l'une des revendications 1 à 6, **caractérisé en ce que** la surpression maximale se situe dans la plage de 200 à 2500 hPa.

8. Hémihydrate de sulfate de calcium du type bêta pouvant être obtenu selon l'une des revendications 1 à 7.

9. Hémihydrate de sulfate de calcium du type bêta selon la revendication 8, **caractérisé en ce que** la valeur eau-gypse est comprise entre 0,35 et 0,55.

10. Cuiseur de gypse destiné à la production d'hémihydrate de sulfate de calcium du type bêta destiné à la réalisation du procédé selon l'une des revendications 1 à 9, comprenant

un réservoir de réception résistant à la pression, pourvu d'une ouverture de remplissage, pouvant être fermée de façon étanche à la pression, pour le remplissage de gypse et éventuellement d'eau, et pourvu d'une ouverture de prélèvement, pouvant être fermée de façon étanche à la pression, pour le prélèvement de l'hémihydrate de sulfate de calcium du type bêta produit,

dans lequel le réservoir de réception présentant en plus un dispositif de sécurité destiné à l'échappement de surpression, et

dans lequel une ouverture d'échappement de vapeur étant présente, qui est éventuellement raccordée à un élément filtrant, en particulier pour le filtrage de l'hémihydrate de sulfate de calcium du type bêta, et

le cuiseur de gypse étant agencé de telle sorte qu'il se forme une colonne de matériau en gypse fluidisé lors de la réalisation du procédé.

11. Dispositif selon la revendication 10, **caractérisé en ce que** le réservoir de réception est équipé de systèmes d'étanchéité tels qu'une garniture étanche à anneau glissant sur l'agitateur et/ou de systèmes d'étanchéité sur des dispositifs d'amenée et d'évacuation de matériau et de buées tels que des sas spécialement rendus étanches à la sortie de vapeur.

12. Dispositif selon la revendication 10 ou 11, **caractérisé par** un équipement de chauffage, chauffant le réservoir de réception, pour le chauffage à plus de 100 °C du gypse disposé dans le réservoir de réception et de l'eau.

13. Dispositif selon la revendication 11 ou 12, **caractérisé par** l'utilisation d'une conduite tubulaire chauffée et/ou isolée et de filtres.

14. Dispositif selon l'une des revendications 10 à 13, **caractérisé en ce que** l'ouverture de remplissage et l'ouverture de prélèvement sont réalisées en tant qu'ouverture commune.

**Fig.1**

Temperatur [°C] (y-axis)

Zeit [min] (x-axis)

1 ‒‒‒ V36 0,05 bar
2 ‒‒‒ V29 0,10 bar
3 ‒‒‒ V35 0,15 bar
4 ‒‒‒ V28 0,20 bar
5 ‒‒‒ V25 0,30 bar
6 ‒‒‒ V23 0,50 bar
7 ‒‒‒ V22 0,80 bar
8 ‒‒‒ V21 1,00 bar
9 ‒‒‒ V18 1,2 bar
10 ‒‒‒ V16 1,5 bar
11 ‒‒‒ V24 2,0 bar
12 ‒‒‒ V13 2,5 bar

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69305993 T2
- GB 1262083 A